# EUROPÄISCHE PATENTANMELDUNG

(11) **EP 4 227 143 A1**
(43) Veröffentlichungstag der Anmeldung: **16.08.2023**
(21) Anmeldenummer: 23155832.1
(22) Anmeldetag: 09.02.2023
(51) Int. Cl.: B60L 9/00, B60L 9/24, B60L 50/53, B60R 16/03, H02J 1/00

(54) **FAHRZEUG UND VERFAHREN ZU DESSEN BETRIEB**

(30) Priorität: 15.02.2022 DE 102022000582
(71) Anmelder: Siemens Mobility GmbH, 81739 München (DE)
(72) Erfinder: Hassler, Stefan, 91281 Kirchenthumbach, OT Neuzirkendorf (DE)
(74) Vertreter: Siemens Patent Attorneys

(57) **Zusammenfassung**

Die Erfindung bezieht sich unter anderem auf ein Fahrzeug. Erfindungsgemäß ist vorgesehen, dass zumindest zwei Wagen (11, 12) des Fahrzeugs jeweils mit einem elektrischen Antrieb (20) und einem elektrischen Energiespeicher (30), der zum Speisen des jeweiligen Antriebs (20) geeignet ist, ausgestattet sind und die Antriebe (20) der zumindest zwei Wagen (11, 12) an einen wagenübergreifenden Gleichspannungszwischenkreis (40) angeschlossen sind.

## Beschreibung

Die Erfindung bezieht sich auf ein mehrgliedriges Fahrzeug.

Im Bereich der Eisenbahntechnik sind zwei- oder mehrgliedrige Eisenbahnzüge bekannt, die keine eigenen Energiespeicher zur Antriebsspeisung aufweisen und bei denen aus Redundanzgründen zumindest zwei unabhängige Gleichspannungszwischenkreise vorhanden sind. Jeder der Gleichspannungszwischenkreise ist jeweils über einen eigenen bzw. individuell zugeordneten netzseitigen Umrichter mit einem streckenseitigen Energieversorgungsnetz verbindbar.

Bei heutzutage bekannten batteriehybriden Eisenbahnzügen ist jeder der angetriebenen Wagen jeweils mit einem eigenen unabhängigen Gleichspannungszwischenkreis ausgestattet.

Die oben beschriebenen Antriebsarchitekturen erfüllen die gängigen Anforderungen an einen Weiterbetrieb im Falle eines Teilausfalls des Zugsystems. Aufgrund der hohen Redundanz an Komponenten sind jedoch die Kosten des Gesamtfahrzeuges relativ hoch.

Der Erfindung liegt die Aufgabe zugrunde, ein kostenoptimiertes Fahrzeug anzugeben, bei dem die Antriebsfunktion auch im Falle eines Teilausfalls des Gesamtsystems zumindest im Rahmen eines Notbetriebs aufrechterhalten bleiben kann.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass zumindest zwei Wagen des Fahrzeugs jeweils mit einem elektrischen Antrieb und einem elektrischen Energiespeicher, der zum Speisen des jeweiligen Antriebs geeignet ist, ausgestattet sind und die Antriebe der zumindest zwei Wagen an einen wagenübergreifenden Gleichspannungszwischenkreis angeschlossen sind.

Ein wesentlicher Vorteil des erfindungsgemäßen Fahrzeugs ist darin zu sehen, dass sich die zumindest zwei Wagen einen gemeinsamen Gleichspannungszwischenkreis, also einen Gemeinschaftsgleichspannungszwischenkreis, teilen. Durch das Vorsehen eines wagenübergreifenden Gleichspannungszwischenkreises lässt sich die Anzahl der diesbezüglichen Komponenten reduzieren. Trotzdem ist auch im Falle eines Ausfalls des Gleichspannungszwischenkreises kein kompletter Ausfall der Fahrfähigkeit des Fahrzeugs zu befürchten; denn jeder der zwei Wagen ist aufgrund der individuellen Ausstattung mit Antrieb und Energiespeicher jeweils allein antriebsfähig und ermöglicht in den meisten Ausfallszenarien zumindest einen Notbetrieb für die Weiterfahrt zur nächsten Haltestelle.

Mit Blick auf eine darüber hinausgehende Reduktion der Komponenten wird es als vorteilhaft angesehen, wenn ein Gemeinschaftsgleichspannungssteller vorhanden ist, der einen an den Gleichspannungszwischenkreis angeschlossenen Primäranschluss und mindestens zwei Sekundäranschlüsse aufweist, von denen einer an den Energiespeicher eines der zumindest zwei Wagen und ein anderer an den Energiespeicher eines anderen der zumindest zwei Wagen angeschlossen ist.

Der Gemeinschaftsgleichspannungssteller ist bezüglich der Sekundäranschlüsse vorzugsweise individuell derart ansteuerbar, dass er jeden der angeschlossenen Energiespeicher individuell laden oder entladen kann.

Bei einer als vorteilhaft angesehenen Ausführungsvariante ist vorgesehen, dass in einem der zumindest zwei Wagen eine Umschalteinrichtung vorhanden ist, die eine Normalbetriebsstellung und eine Notbetriebsstellung einnehmen kann.

In ihrer Normalbetriebsstellung verbindet die Umschalteinrichtung vorzugsweise den Energiespeicher ihres Wagens unmittelbar mit dem zugeordneten Sekundäranschluss des Gemeinschaftsgleichspannungsstellers.

In ihrer Notbetriebsstellung verbindet die Umschalteinrichtung vorzugsweise den Energiespeicher unmittelbar mit dem Antrieb und dem Gleichspannungszwischenkreis, unter Bildung eines den Sekundäranschluss elektrisch umgehenden Bypasses.

Ist beispielsweise der Gemeinschaftsgleichspannungssteller defekt, so kann der Antrieb - in der Notbetriebsstellung der Umschalteinrichtung - bei Fahrt in einem elektrifizierten Streckenabschnitt über den Gleichspannungszwischenkreis weiter streckenseitige Antriebsenergie eines streckenseitigen Energieversorgungsnetzes beziehen oder elektrodynamische Bremsenergie in das streckenseitige Energieversorgungsnetz einspeisen; bei Fahrt in einem nichtelektrifizierten Streckenabschnitt kann der Antrieb Antriebsenergie vom wageneigenen Energiespeicher beziehen sowie elektrodynamische Bremsenergie in den wageneigenen Energiespeicher einspeisen.

Eine solche Umschalteinrichtung kann beispielsweise durch einen Wechselschalter gebildet sein.

Um einen Kurzschluss zwischen Energiespeichern zu vermeiden, wird es als vorteilhaft angesehen, wenn in mindestens einem anderen der zumindest zwei Wagen, vorzugsweise in allen anderen der zumindest zwei Wagen, jeweils eine Doppelschalteinrichtung vorhanden ist, die eine Normalbetriebsstellung und eine Notbetriebsstellung einnehmen kann.

Die Doppelschalteinrichtung verbindet in ihrer Normalbetriebsstellung vorzugsweise den Energiespeicher ihres Wagens unmittelbar mit dem zugeordneten Sekundäranschluss des Gemeinschaftsgleichspannungsstellers sowie den Antrieb mit dem Gleichspannungszwischenkreis.

In ihrer Notbetriebsstellung verbindet die Doppelschalteinrichtung vorzugsweise den Energiespeicher ihres Wagens unmittelbar mit dem Antrieb ihres Wagens; außerdem trennt sie vorzugsweise den Energiespeicher und den Antrieb sowohl von dem Gleichspannungszwischenkreis als auch dem Gemeinschaftsgleichspannungssteller elektrisch ab.

In der Notbetriebsstellung der Doppelschalteinrichtung ist ein Weiterbetrieb des Antriebs sowohl im Antriebsbetrieb als auch im Bremsbetrieb möglich, indem der Antrieb Antriebsenergie vom wageneigenen Energiespeicher bezieht oder elektrodynamische Bremsenergie in den wageneigenen Energiespeicher einspeist. Der Weiterbetrieb ist dabei beispielsweise unabhängig davon möglich, ob der Gemeinschaftsgleichspannungssteller, der Gleichspannungszwischenkreis und/oder ein an den Gleichspannungszwischenkreis angeschlossener netzseitiger Umrichter ausgefallen ist.

Eine solche Doppelschalteinrichtung kann beispielsweise durch einen drei Anschlüsse aufweisenden Wechselschalter (1x2-Schalter) und ein zwei Anschlüsse aufweisendes (1x1)-Schaltelement gebildet sein oder die genannten Elemente zumindest auch aufweisen.

Ein Anschluss des Schaltelements ist vorzugsweise an eine Verbindungsstelle angeschlossen, die den Antrieb und einen der Wechselanschlüsse des Wechselschalters verbindet.

Der Wechselschalter und das Schaltelement können beispielsweise mechanische und/oder elektronische Schalter sein, beispielsweise Halbleiterschalter.

Alternativ kann in vorteilhafter Weise vorgesehen sein, dass in jedem der zumindest zwei Wagen jeweils eine solche Doppelschalteinrichtung vorhanden ist. In diesem Falle sind beide Wagen voll funktionsfähig, selbst wenn der Gemeinschaftsgleichspannungssteller, der wagenübergreifende Gleichspannungszwischenkreis und der an den Gleichspannungszwischenkreis angeschlossene netzseitige Umrichter ausgefallen sind.

Besonders vorteilhaft ist es, wenn der Gemeinschaftsgleichspannungssteller für jeden der Energiespeicher jedes der Wagen jeweils einen zugeordneten Sekundäranschluss aufweist.

Anstelle eines Gemeinschaftsgleichspannungsstellers können auch wageneigene Gleichspannungssteller vorgesehen werden.

Bei der letztgenannten Ausführungsform ist es vorteilhaft, wenn in einem der zumindest zwei Wagen eine Umschalteinrichtung vorhanden ist, die in ihrer Normalbetriebsstellung den Energiespeicher ihres Wagens mittelbar über einen wageneigenen Gleichspannungssteller mit dem Gleichspannungszwischenkreis verbindet und in ihrer Notbetriebsstellung den wageneigenen Energiespeicher unmittelbar mit dem wageneigenen Antrieb und dem Gleichspannungszwischenkreis verbindet, und zwar unter Bildung eines den wageneigenen Gleichspannungssteller elektrisch umgehenden Bypasses.

Zur Vermeidung einer Überlastung durch Kurzschluss der Energiespeicher untereinander wird es als vorteilhaft angesehen, wenn in mindestens einem anderen der zumindest zwei Wagen, vorzugsweise in jedem anderen der zumindest zwei Wagen, jeweils eine Doppelschalteinrichtung vorhanden ist, die in ihrer Normalbetriebsstellung den Energiespeicher ihres Wagens mittelbar über einen wageneigenen Gleichspannungssteller mit dem Gleichspannungszwischenkreis sowie den wageneigenen Antrieb mit dem Gleichspannungszwischenkreis verbindet und in ihrer Notbetriebsstellung den wageneigenen Energiespeicher unmittelbar mit dem wageneigenen Antrieb verbindet sowie den wageneigenen Energiespeicher und den wageneigenen Antrieb sowohl von dem Gleichspannungszwischenkreis als auch von dem wageneigenen Gleichspannungssteller elektrisch abtrennt.

Alternativ kann auch bei Ausführungsvarianten mit wageneigenen Gleichspannungsstellern vorgesehen sein, dass in jedem der zumindest zwei Wagen jeweils eine Doppelschalteinrichtung vorhanden ist, wie sie oben beschrieben worden ist.

Zum Anschluss an ein netzseitiges Energieversorgungsnetz weist das Fahrzeug vorzugsweise zumindest einen Stromabnehmer auf.

Mit Blick auf eine geringe Anzahl an Komponenten wird es als vorteilhaft angesehen, wenn das Fahrzeug einen einzigen wagenübergreifenden Gleichspannungszwischenkreis aufweist, unabhängig von der Anzahl der Wagen. Der einzige wagenübergreifende Gleichspannungszwischenkreis erstreckt sich vorzugsweise in alle Wagen, die einen wageneigenen Antrieb und/oder einen wageneigenen Energiespeicher aufweisen.

Vorteilhaft ist es, wenn das Fahrzeug beispielsweise zwei Wagen mit jeweils einem Antrieb aufweist und der einzige wagenübergreifende Gleichspannungszwischenkreis mit zwei antriebseigenen Pulswechselrichtern der zwei Antriebe verbunden ist.

Zum Anschluss an ein netzseitiges Energieversorgungsnetz weist das Fahrzeug vorzugsweise zumindest einen, beispielsweise genau einen, Stromabnehmer auf.

Zur netzseitigen Speisung des wagenübergreifenden Gleichspannungszwischenkreises ist vorzugsweise ausschließlich ein einziger netzseitiger Umrichter (z. B. Vierquadrantensteller) vorhanden, der an den wagenübergreifenden Gleichspannungszwischenkreis angeschlossen ist.

Auch ist es vorteilhaft, wenn das Fahrzeug ausschließlich einen einzigen netzseitigen Transformator aufweist. Ein solcher einziger netzseitiger Transformator ist vorzugsweise zwischen den einzigen netzseitigen Umrichter und den fahrzeugseitigen Stromabnehmer geschaltet. Der einzige netzseitige Umrichter ist vorzugsweise elektrisch zwischen den wagenübergreifenden Gleichspannungszwischenkreis und den einzigen netzseitigen Transformator geschaltet.

Die Betriebsspannung des Gleichspannungszwischenkreises liegt vorzugsweise in einem Bereich zwischen ??? und ??? V **(Herr Dr. Haßler, bitte ergänzen)**.

Die Antriebe sind vorzugsweise geeignet, ihren jeweiligen Wagen entlang der jeweiligen Fahrtrichtung des Fahrzeugs, also wahlweise vorwärts oder rückwärts, anzutreiben.

Die Antriebe sind vorzugsweise geeignet, beim Bremsbetrieb des Fahrzeugs elektrodynamische Bremsleistung in den Gleichspannungszwischenkreis oder direkt in ihren wageneigenen Energiespeicher einzuspeisen.

Die Erfindung bezieht sich außerdem auf ein Verfahren zum Betreiben eines Fahrzeugs, insbesondere Schienenfahrzeug, sowie insbesondere auch auf ein Verfahren zum Betreiben von Fahrzeugen, insbesondere Schienenfahrzeugen, wie sie oben beschrieben worden sind. Erfindungsgemäß ist vorgesehen, dass zumindest zwei Wagen des Fahrzeugs jeweils mit einem elektrischen Antrieb und einem elektrischen Energiespeicher ausgestattet sind und die Antriebe der zumindest zwei Wagen im Normalbetrieb von einem wagenübergreifenden Gleichspannungszwischenkreis mit Antriebsenergie gespeist werden und im Störbetrieb mit gespeicherter Energie des Energiespeichers des jeweiligen Wagens gespeist werden.

Bezüglich der Vorteile des erfindungsgemäßen Verfahrens und dessen vorteilhafter Ausgestaltungen sei auf die obigen Ausführungen im Zusammenhang mit dem erfindungsgemäßen Fahrzeug und dessen vorteilhafter Ausgestaltungen verwiesen. Vorteilhaft ist es insbesondere, wenn das Verfahren so wie oben im Zusammenhang mit dem Betrieb des erfindungsgemäßen Fahrzeugs beschrieben durchgeführt wird.

Für den Normalbetrieb werden die Energiespeicher der Wagen vorzugsweise mittelbar über einen Gemeinschaftsgleichspannungssteller mit dem Gleichspannungszwischenkreis verbunden.

Für den Notbetrieb, wenn zum Beispiel der Gemeinschaftsgleichspannungssteller ausgefallen ist, werden die Energiespeicher vorzugsweise unmittelbar mit dem Antrieb ihres jeweiligen Wagens verbunden, unter Bildung eines den Gemeinschaftsgleichspannungssteller elektrisch umgehenden Bypasses.

Vorzugsweise erfolgt beim Notbetrieb bei zumindest einem der Wagen auch eine Abkopplung des Antriebs und des Energiespeichers vom Gleichspannungszwischenkreis, beispielsweise mittels eines Schaltelements.

Die Erfindung wird nachfolgend anhand von Ausführungsbeispielen näher erläutert, dabei zeigen beispielhaft:
- Figur 1: ein erstes Ausführungsbeispiel für ein erfindungsgemäßes Schienenfahrzeug im Normalbetrieb,
- Figur 2: das erste Ausführungsbeispiel gemäß Figur 1 im Notbetrieb,
- Figur 3: ein zweites Ausführungsbeispiel für ein erfindungsgemäßes Schienenfahrzeug im Normalbetrieb,
- Figur 4: das zweite Ausführungsbeispiel gemäß Figur 3 im Notbetrieb und
- Figur 5: ein drittes Ausführungsbeispiel für ein erfindungsgemäßes Schienenfahrzeug im Notbetrieb.

In den Figuren werden der Übersicht halber für identische oder vergleichbare Komponenten dieselben Bezugszeichen verwendet.

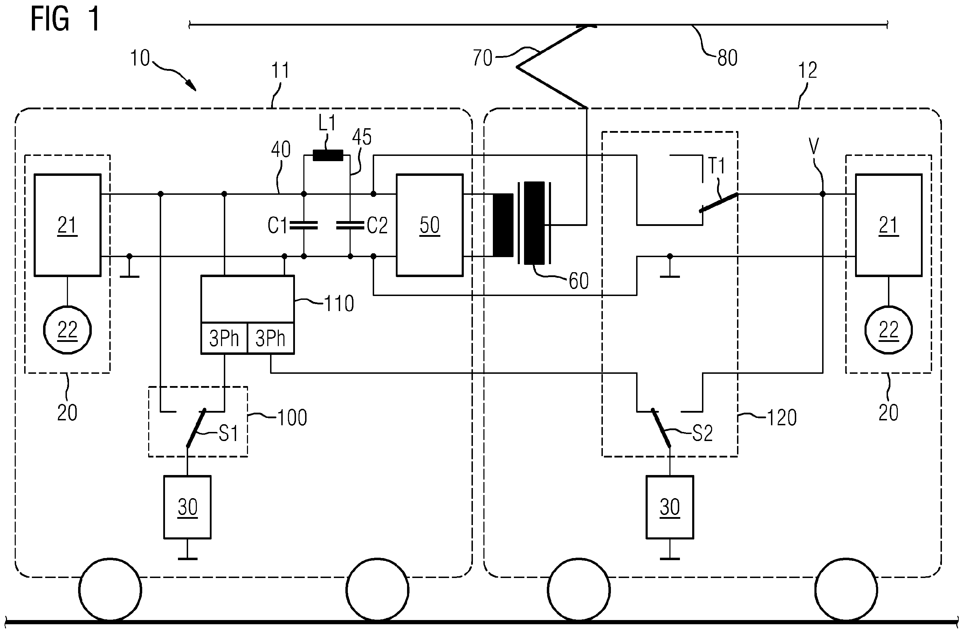

Die Figur 1 zeigt ein Ausführungsbeispiel für ein erfindungsgemäßes Schienenfahrzeug 10 in einer schematischen Darstellung. Das Schienenfahrzeug 10 gemäß Figur 1 umfasst einen in der Figur 1 linken Wagen 11, der mit einem in der Figur 1 rechten Wagen 12 gekoppelt ist. Jeder der beiden Wagen 11 und 12 ist jeweils mit einem eigenen Antrieb 20 und einem eigenen elektrischen Energiespeicher 30 ausgestattet. Die Antriebe 20 können jeweils einen oder mehrere antriebsseitige Umrichter 21 sowie einen oder mehrere Motoren 22 umfassen.

Das Schienenfahrzeug 10 ist darüber hinaus mit einem wagenübergreifenden Gleichspannungszwischenkreis 40 ausgestattet, der sich in den linken und rechten Wagen hineinerstreckt und mit einem internen Saugkreis 45 ausgestattet ist. Der Saugkreis 45 umfasst eine Induktivität L1 und zwei Kondensatoren C1 und C2.

Der Gleichspannungszwischenkreis 40 steht über einen netzseitigen Umrichter 50 mit einem netzseitigen Transformator 60 in Verbindung, der den Gleichspannungszwischenkreis 40 mit einem Stromabnehmer 70 des Schienenfahrzeugs 10 verbindet. Der Stromabnehmer 70 kann mit einem externen Energieversorgungsnetz 80 verbunden werden, um einen Energiefluss zwischen dem Energieversorgungsnetz 80 und dem Schienenfahrzeug 10 zu erlauben.

Einer der zwei Wagen des Schienenfahrzeugs 10, beispielsweise der in der Figur 1 linke Wagen 11, ist mit einer Umschalteinrichtung 100 ausgestattet, die in einer Normalbetriebsstellung den Energiespeicher 30 ihres Wagens 11 über einen Gemeinschaftsgleichspannungssteller 110 mit dem Gleichspannungszwischenkreis 40 verbindet und in einer Notbetriebsstellung den Energiespeicher 30 unmittelbar mit dem Antrieb 20 und dem Gleichspannungszwischenkreis 40 verbindet. Die Umschalteinrichtung 100 wird bei dem Ausführungsbeispiel gemäß Figur 1 durch einen Wechselschalter S1 gebildet, dessen Gemeinschaftsanschluss an den Energiespeicher 30 angeschlossen ist. Einer der Wechselanschlüsse des Wechselschalters S1 steht mit dem Antrieb 21 und dem Gleichspannungszwischenkreis 40 in Verbindung; der andere der zwei Wechselanschlüsse ist an einen Sekundäranschluss des Gemeinschaftsgleichspannungsstellers 110 angeschlossen.

Die Funktion der Umschalteinrichtung 100 besteht darin, dass im störungsfreien Normalbetrieb des Schienenfahrzeugs 10 der Energiespeicher 30 des linken Wagens 11 ohne direkte Kopplung mit dem wageneigenen Antrieb 20 über den Gemeinschaftsgleichspannungssteller 110 betrieben werden kann, also geladen oder entladen werden kann. Im Falle eines Ausfalls des Gleichspannungszwischenkreises 40 oder des Gemeinschaftsgleichspannungsstellers 110 erlaubt die Umschalteinrichtung 100 eine Weiterversorgung des Antriebs 20 des linken Wagens 11, indem sie den Energiespeicher 30 des linken Wagens 11 mit dem Antrieb 20 des linken Wagens 11 verbindet und so eine direkte Speisung des Antriebs 20 ermöglicht.

In jedem anderen Wagen des Schienenfahrzeugs 10, bei dem Ausführungsbeispiel gemäß Figur 1 also in dem in der Figur 1 rechten Wagen 12, ist eine Doppelschalteinrichtung 120 vorhanden, die in einer Normalbetriebsstellung ihren zugeordneten Energiespeicher 30 über den Gemeinschaftsgleichspannungssteller 110 mit dem Gleichspannungszwischenkreis 40 verbindet und in einer Notbetriebsstellung ihren zugeordneten Energiespeicher unmittelbar mit dem Antrieb 20 des eigenen Wagens 12 verbindet und dabei sowohl von dem Gleichspannungszwischenkreis 40 als auch von dem Gemeinschaftsgleichspannungssteller 110 abtrennt.

Die Doppelschalteinrichtung 120 umfasst bei dem Ausführungsbeispiel gemäß Figur 1 einen Wechselschalter S2, dessen Gemeinschaftsanschluss an den zugeordneten Energiespeicher 30 angeschlossen ist. Ein erster Wechselanschluss des Wechselschalters S2 steht mit dem zugeordneten Antrieb 20 in Verbindung; ein zweiter Wechselanschluss des Wechselschalters S2 ist an einen anderen Sekundäranschluss des Gemeinschaftsgleichspannungsstellers 110 angeschlossen. Der Wechselschalter S2 kann somit also dem Wechselschalter S1 der Umschalteinrichtung 110 des Wagens 11 entsprechen.

Zusätzlich zu dem Wechselschalter S2 ist bei der Doppelschalteinrichtung 120 ein Schaltelement T1 vorhanden, das elektrisch zwischen den Gleichspannungszwischenkreis 40 und die Verbindungsstelle V, die den ersten Wechselanschluss des Wechselschalters S2 und den Antrieb 20 des rechten Wagens 12 verbindet, geschaltet ist.

Die Funktion der Doppelschalteinrichtung 120 besteht darin, im Falle eines Ausfalls von Komponenten des Gleichspannungszwischenkreises 40 und/oder des Gemeinschaftsgleichspannungsstellers 110 einen Weiterbetrieb des Antriebs 20 des eigenen rechten Wagens 12 zu gewährleisten, indem der wageneigene Energiespeicher 30 unmittelbar mit dem wageneigenen Antrieb 20 verbunden wird, ohne dass eine Restanbindung an das defekte elektrische Restsystem des Schienenfahrzeugs 10 weiter bestehen bleibt.

Durch die Entkopplung des Energiespeichers 30 des rechten Wagens 12 vom Gleichspannungszwischenkreis 40 wird darüber hinaus sichergestellt, dass nach einem Umschalten der Umschalteinrichtung 100 des linken Wagens 11 in die Notbetriebsstellung keine direkte elektrische Verbindung zwischen den beiden Energiespeichern 30 der beiden Wagen 11 und 12 bestehen kann und kein Kurzschlussstrom bzw. kein Ausgleichsstrom zwischen den beiden Energiespeichern 30 zu einer betriebsgefährdenden Situation führen kann.

Bei dem Ausführungsbeispiel gemäß Figur 1 ist der Gemeinschaftsgleichspannungssteller 110 primärseitig an den Gleichspannungszwischenkreis 40 angeschlossen; sekundärseitig weist er für jeden der an ihn angeschlossenen Energiespeicher 30 jeweils einen individuellen Sekundäranschluss auf, wodurch ermöglicht wird, dass jeder der an den Gemeinschaftsgleichspannungssteller 110 angeschlossenen Energiespeicher 30 jeweils individuell geladen oder entladen werden kann.

Als besonders vorteilhaft wird es angesehen, wenn die Sekundäranschlüsse des Gleichspannungsstellers 110 für jeden daran angeschlossenen Energiespeicher jeweils drei Stellerphasen aufweist, wie durch Bezugszeichen 3Ph in der Figur 1 angedeutet ist. Alternativ können auch mehr als drei oder weniger Stellerphasen pro Sekundäranschluss vorhanden sein, beispielsweise nur eine pro Sekundäranschluss.

Das Schienenfahrzeug 10 gemäß Figur 1 wird vorzugsweise wie folgt betrieben:
Sind alle der oben beschriebenen Komponenten betriebsbereit, so wird das Schienenfahrzeug in seinem Normalbetrieb betrieben, bei dem sowohl die Umschalteinrichtung 100 als auch die Doppelschalteinrichtung 120 in ihre jeweilige Normalbetriebsstellung gestellt sind. Die Normalbetriebsstellung ist in der Figur 1 gezeigt. Im Normalbetrieb erfolgt die Anbindung der Energiespeicher 30 jeweils über den Gemeinschaftsgleichspannungssteller 110, der ein individuelles Laden oder Entladen der Energiespeicher 30 steuert bzw. regelt.

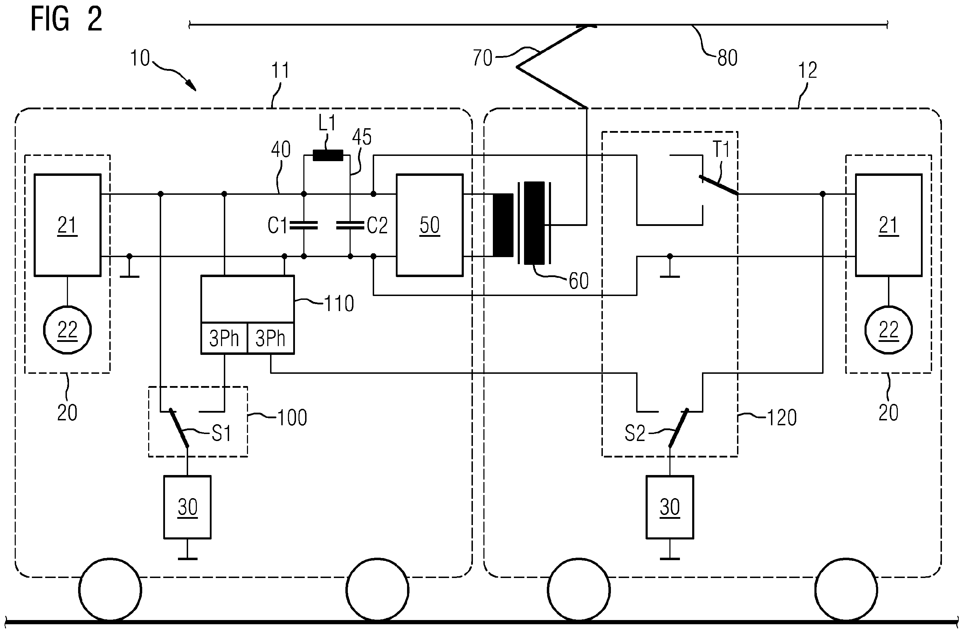

Kommt es zu einem Defekt von Komponenten, beispielsweise im Bereich des Gleichspannungszwischenkreises 40, des netzseitigen Umrichters 50, des Transformators 60 oder des Gemeinschaftsgleichspannungsstellers 110, so werden die Umschalteinrichtung 100 und die Doppelschalteinrichtung 120 in ihre jeweilige Notbetriebsstellung umgeschaltet, wie sie in der Figur 2 gezeigt ist. Man erkennt in der Figur 2, dass der Wechselschalter S1 der Umschalteinrichtung 100 den Energiespeicher 30 des linken Wagens 11 von dem zugeordneten Sekundäranschluss des Gemeinschaftsgleichspannungsstellers 110 trennt und stattdessen direkt mit dem Gleichspannungszwischenkreis 40 sowie dem wageneigenen Antrieb 20 verbindet. In der in Figur 2 gezeigten Notbetriebsstellung des Wechselschalters S1 ist also ein Weiterbetrieb des Antriebs 20 des linken Wagens 11 mittels der Energie des Energiespeichers 30 möglich.

Die Doppelschalteinrichtung 120 im rechten Wagen 12 wird ebenfalls in ihre Notbetriebsstellung gestellt. In der Notbetriebsstellung wird der Wechselschalter S2 der Doppelschalteinrichtung 120 derart umgeschaltet, dass der Energiespeicher 30 des rechten Wagens 12 vom zugeordneten Sekundäranschluss des Gemeinschaftsgleichspannungsstellers 110 getrennt und stattdessen mit dem wageneigenen Antrieb 20 verbunden wird. Mittels des Schaltelements T1 der Doppelschalteinrichtung 120 werden der wageneigene Antrieb 20 und der wageneigene Energiespeicher 30 von allen übrigen elektrischen Komponenten, insbesondere vom Gleichspannungszwischenkreis 40, vom netzseitigen Umrichter 50 und vom Energiespeicher 30 des linken Wagens 11 getrennt, sodass der wageneigene Antrieb 20 und der wageneigene Energiespeicher 30 des rechten Wagens 12 autark von allen übrigen Komponenten arbeiten können.

Bei dem Ausführungsbeispiel gemäß den Figuren 1 und 2 weist das Schienenfahrzeug 10 mit Blick auf eine minimale Anzahl elektrischer Komponenten lediglich einen einzigen Gleichspannungszwischenkreis 40 auf, der sich durch alle Wagen des Schienenfahrzeugs 10 erstreckt. Auch ist lediglich ein einziger netzseitiger Umrichter 50, bei dem es sich vorzugsweise um einen Vierquadrantensteller handelt, und ein einziger netzseitiger Transformator 60 vorgesehen.

Die Verteilung bzw. die Anordnung des Gemeinschaftsgleichspannungsstellers 110, des netzseitigen Umrichters 50 und des Transformators 60 auf die Wagen 11 und 12 ist nur beispielhaft zu verstehen. Anders als in den Figuren 1 und 2 beispielhaft gezeigt, kann der Gemeinschaftsgleichspannungssteller 110 und/oder der netztseitige Umrichter 50 auch im rechten Wagen 12 und der einzige Transformator 60 und der Stromabnehmer 70 im linken Wagen 11 angeordnet sein. In Schienenfahrzeugen, bei denen sich der Gleichspannungszwischenkreis über drei oder mehr Wagen erstreckt, sind auch andere Zuordnungen der genannten Komponenten zu den einzelnen Wagen möglich.

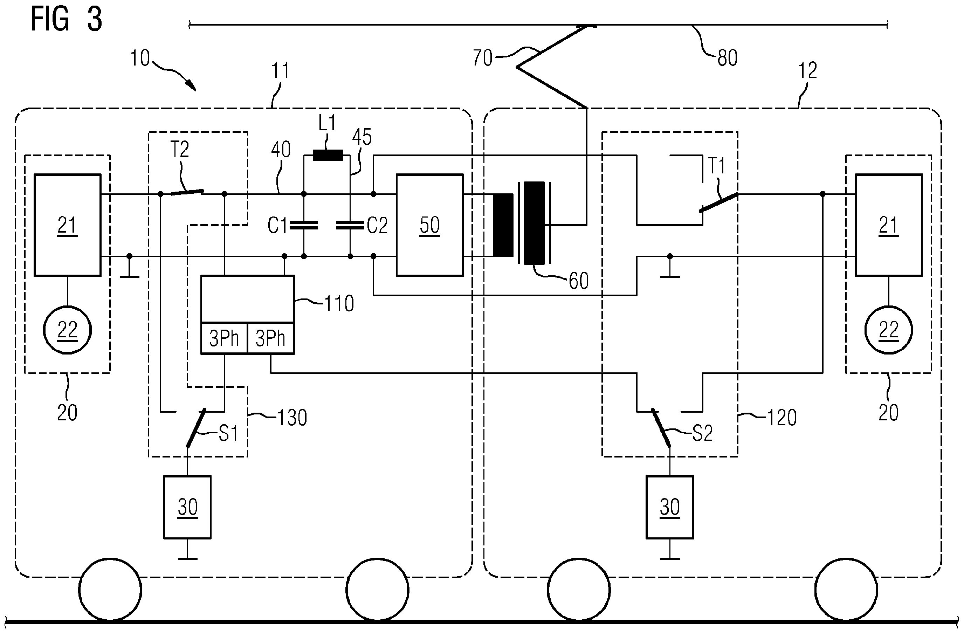

Die Figur 3 zeigt ein zweites Ausführungsbeispiel für ein erfindungsgemäßes Schienenfahrzeug 10. Bei dem Ausführungsbeispiel gemäß Figur 3 ist der Energiespeicher 30 des linken Wagens 11 über eine Doppelschalteinrichtung 130 an den Gemeinschaftsgleichspannungssteller 110 und den Gleichspannungszwischenkreis 40 angeschlossen; die Doppelschalteinrichtung 130 weist zusätzlich zu dem Wechselschalter S1 ein Schaltelement T2 auf und kann mit der Doppelschalteinrichtung 120 des rechten Wagens 12 identisch sein.

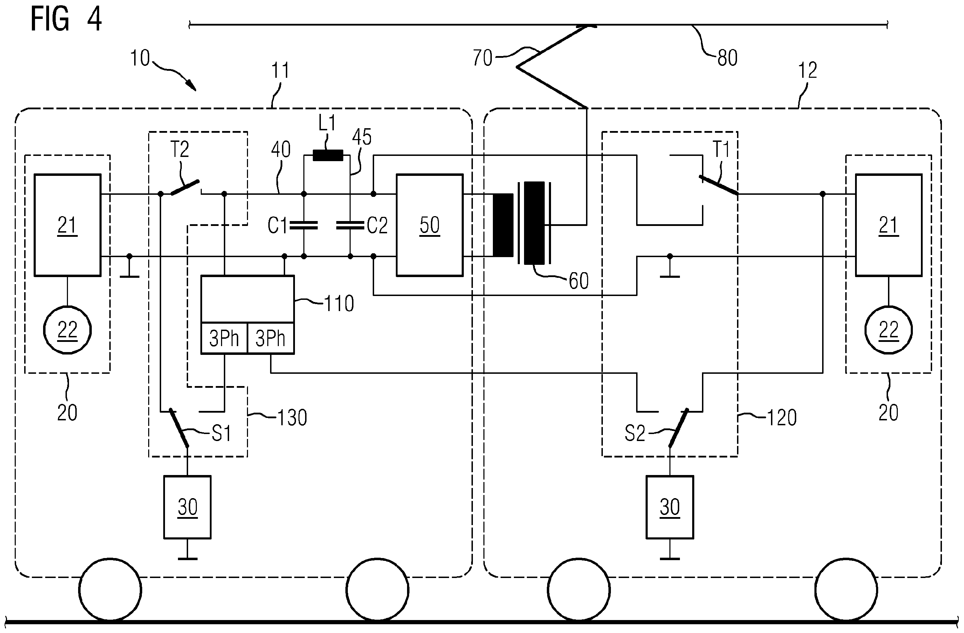

Dies bedeutet, dass die Doppelschalteinrichtung 130 im linken Wagen 11 derart betrieben werden kann, dass sie in ihrer Normalbetriebsstellung (vgl. Figur 3) den Energiespeicher 30 ihres Wagens 11 über den Gemeinschaftsgleichspannungssteller 110 mit dem Gleichspannungszwischenkreis 40 verbindet und in ihrer Notbetriebsstellung (vgl. Figur 4) den Energiespeicher 30 unmittelbar mit dem Antrieb 20 des linken Wagens 11 verbindet und dabei sowohl von dem Gleichspannungszwischenkreis 40 als auch von dem Gemeinschaftsgleichspannungssteller 110 trennt.

Die in den Figuren 3 und 4 gezeigte Ausgestaltung des Schienenfahrzeugs 10 weist den Vorteil auf, dass im Falle eines Kurzschlusses innerhalb des Gemeinschaftsgleichspannungsstellers 110 und/oder des Gleichspannungszwischenkreises 40 und/oder des internen Umrichters 50 auch ein Weiterbetrieb des Antriebs 20 des linken Wagens 11 mittels des Energiespeichers 30 des linken Wagens 11 möglich ist, da der Energiespeicher 30 und der Antrieb 20 des Wagens 11 von den defekten Komponenten in der Notbetriebsstellung getrennt sind.

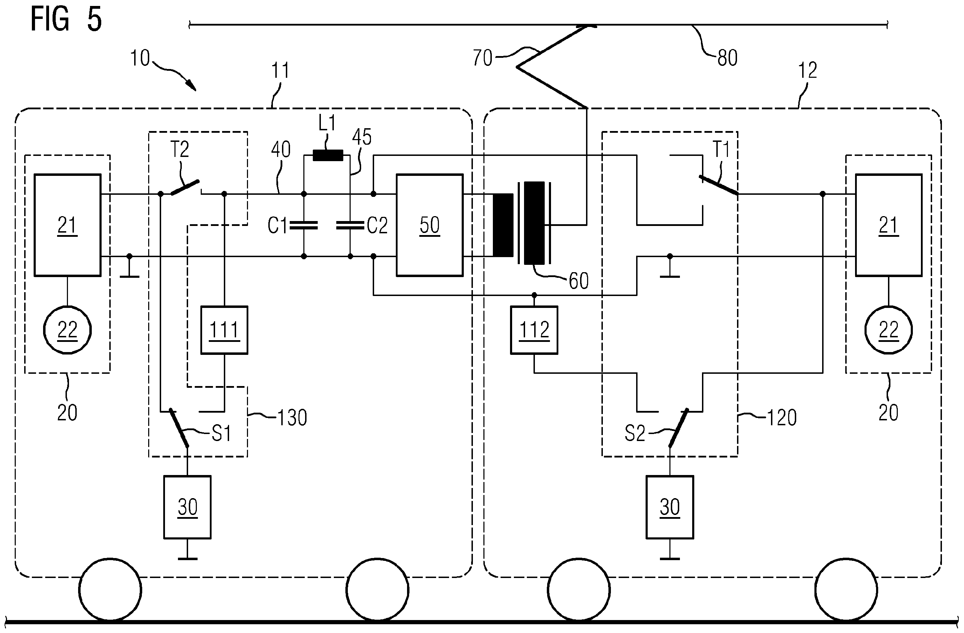

Die Figur 5 zeigt ein drittes Ausführungsbeispiel für ein erfindungsgemäßes Schienenfahrzeug 10. Bei dem Ausführungsbeispiel gemäß Figur 5 ist jeder der beiden Wagen 11 und 12 mit einem eigenen Gleichspannungssteller 111 bzw. 112 ausgestattet, der den jeweiligen wageneigenen Energiespeicher 30 mit dem wagenübergreifenden Gleichspannungszwischenkreis 40 verbindet. Im Übrigen gelten die obigen Ausführungen im Zusammenhang mit den Figuren 1 bis 4 bei dem Ausführungsbeispiel gemäß Figur 5 entsprechend.

Bei den in den Figuren 1 bis 5 gezeigten Ausführungsbeispielen sind nur zwei Wagen 11 und 12 vorhanden; das Schienenfahrzeug 10 ist also zweigliedrig bzw. zweiteilig. Alternativ kann das Schienenfahrzeug 10 auch mehr als zwei miteinander gekoppelte Wagen umfassen, also mehrgliedrig sein.

Bei einem zweigliedrigen Schienenfahrzeug 10 ist es vorteilhaft, wenn die zwei Wagen 11 und 12 jeweils einen Antrieb 20 mit antriebseigenem Pulswechselrichter 21 aufweisen und der einzige wagenübergreifende Gleichspannungszwischenkreis 40 des Schienenfahrzeugs 10 mit den zwei antriebseigenen Pulswechselrichtern 21 der zwei Antriebe 20 verbunden ist. Zum Anschluss an das netzseitige Energieversorgungsnetz weist das Schienenfahrzeug 10 vorzugsweise nur einen einzigen Stromabnehmer 70 auf.

Im Falle, dass mehr als zwei Wagen vorhanden sind, wird es als vorteilhaft angesehen, wenn sich der wagenübergreifende Gleichspannungszwischenkreis 40 durch zumindest zwei oder drei, vorzugsweise durch alle Wagen des Schienenfahrzeugs erstreckt.

Im Übrigen, insbesondere wenn mehr als zwei Wagen vorhanden sind, wird es als vorteilhaft angesehen, wenn maximal einer der Energiespeicher allein über einen Wechselschalter S1 (vgl. Figuren 1 bis 5) an den wagenübergreifenden Gleichspannungszwischenkreis 40 angeschlossen ist. Alle übrigen Energiespeicher 30 sind vorzugsweise jeweils mittels einer Doppelschalteinrichtung 120 wie in den Figuren 1 bis 5 gezeigt an den wagenübergreifenden Gleichspannungszwischenkreis 40 angeschlossen, um im Notbetrieb eine Trennung vom Gleichspannungszwischenkreis 40 und damit auch von allen anderen Energiespeichern zu ermöglichen.

Abschließend sei erwähnt, dass die Merkmale aller oben beschriebener fahrzeug- und verfahrensbezogener Ausführungsbeispiele untereinander in beliebiger Weise kombiniert werden können, um weitere andere Ausführungsbeispiele zu bilden.

## Patentansprüche

1. Fahrzeug (10),
**dadurch gekennzeichnet, dass**
- zumindest zwei Wagen (11, 12) des Fahrzeugs jeweils mit einem elektrischen Antrieb (20) und einem elektrischen Energiespeicher (30), der zum Speisen des jeweiligen Antriebs (20) geeignet ist, ausgestattet sind und
- die Antriebe (20) der zumindest zwei Wagen (11, 12) an einen wagenübergreifenden Gleichspannungszwischenkreis (40) angeschlossen sind.

2. Fahrzeug (10) nach Anspruch 1,
**dadurch gekennzeichnet, dass**
das Fahrzeug einen Gemeinschaftsgleichspannungssteller (110) aufweist, der einen an den Gleichspannungszwischenkreis (40) angeschlossenen Primäranschluss und mindestens zwei Sekundäranschlüsse aufweist, von denen einer an den Energiespeicher (30) eines der zumindest zwei Wagen (11, 12) und ein anderer an den Energiespeicher (30) eines anderen der zumindest zwei Wagen (11, 12) angeschlossen ist.

3. Fahrzeug (10) nach Anspruch 2,
**dadurch gekennzeichnet, dass**
der Gemeinschaftsgleichspannungssteller (110) bezüglich der Sekundäranschlüsse individuell derart ansteuerbar ist, dass er jeden der angeschlossenen Energiespeicher (30) individuell laden oder entladen kann.

4. Fahrzeug (10) nach Anspruch 2 oder 3,
**dadurch gekennzeichnet, dass**
in einem der zumindest zwei Wagen (11) eine Umschalteinrichtung (100) vorhanden ist, die
- in ihrer Normalbetriebsstellung den Energiespeicher (30) ihres Wagens (11) unmittelbar mit dem zugeordneten Sekundäranschluss des Gemeinschaftsgleichspannungsstellers (110) verbindet und
- in ihrer Notbetriebsstellung den Energiespeicher (30) unmittelbar mit dem Antrieb (20) ihres Wagens (11) und dem Gleichspannungszwischenkreis (40) verbindet, und zwar unter Bildung eines den Sekundäranschluss elektrisch umgehenden Bypasses.

5. Fahrzeug (10) nach Anspruch 4,
**dadurch gekennzeichnet, dass**
in einem anderen der zumindest zwei Wagen (12) eine Doppelschalteinrichtung (120) vorhanden ist, die
- in ihrer Normalbetriebsstellung den Energiespeicher (30) ihres Wagens (12) unmittelbar mit dem zugeordneten Sekundäranschluss des Gemeinschaftsgleichspannungsstellers (110) verbindet sowie den Antrieb (20) mit dem Gleichspannungszwischenkreis (40) verbindet und
- in ihrer Notbetriebsstellung den Energiespeicher (30) ihres Wagens (12) unmittelbar mit dem Antrieb (20) ihres Wagens (12) verbindet sowie den Energiespeicher (30) und den Antrieb (20) sowohl von dem Gleichspannungszwischenkreis (40) als auch dem Gemeinschaftsgleichspannungssteller (110) elektrisch abtrennt.

6. Fahrzeug (10) nach Anspruch 2 oder 3,
**dadurch gekennzeichnet, dass**
in jedem der zumindest zwei Wagen (11, 12) jeweils eine Doppelschalteinrichtung (120) vorhanden ist, die
- in ihrer Normalbetriebsstellung den Energiespeicher (30) ihres Wagens (11, 12) unmittelbar mit dem zugeordneten Sekundäranschluss des Gemeinschaftsgleichspannungsstellers (110) verbindet sowie den Antrieb (20) mit dem Gleichspannungszwischenkreis (40) verbindet und
- in ihrer Notbetriebsstellung den Energiespeicher (30) ihres Wagens (11, 12) unmittelbar mit dem Antrieb (20) ihres Wagens (11, 12) verbindet sowie den Energiespeicher (30) und den Antrieb (20) sowohl von dem Gleichspannungszwischenkreis (40) als auch dem Gemeinschaftsgleichspannungsstellers (110) elektrisch abtrennt.

7. Fahrzeug (10) nach einem der voranstehenden Ansprüche 2 bis 6,
**dadurch gekennzeichnet, dass**
der Gemeinschaftsgleichspannungssteller (110) für jeden Energiespeicher (30) jedes der Wagen (11, 12) jeweils einen zugeordneten Sekundäranschluss aufweist.

8. Fahrzeug (10) nach Anspruch 1,
**dadurch gekennzeichnet, dass**
in einem der zumindest zwei Wagen (11) eine Umschalteinrichtung (100) vorhanden ist, die
- in ihrer Normalbetriebsstellung den Energiespeicher (30) ihres Wagens (11) mittelbar über einen wageneigenen Gleichspannungssteller (111) mit dem Gleichspannungszwischenkreis (40) verbindet und
- in ihrer Notbetriebsstellung den wageneigenen Energiespeicher (30) unmittelbar mit dem wageneigenen Antrieb (20) und dem Gleichspannungszwischenkreis (40) verbindet, und zwar unter Bildung eines den wageneigenen Gleichspannungssteller (111) elektrisch umgehenden Bypasses.

9. Fahrzeug (10) nach Anspruch 8,
**dadurch gekennzeichnet, dass**
in einem anderen der zumindest zwei Wagen (12) eine Doppelschalteinrichtung (120) vorhanden ist, die
- in ihrer Normalbetriebsstellung den Energiespeicher (30) ihres Wagens (12) mittelbar über einen wageneigenen Gleichspannungssteller (112) mit dem Gleichspannungszwischenkreis (40) verbindet sowie den wageneigenen Antrieb (20) mit dem Gleichspannungszwischenkreis (40) verbindet und
- in ihrer Notbetriebsstellung den wageneigenen Energiespeicher (30) unmittelbar mit dem wageneigenen Antrieb (20) verbindet sowie den wageneigenen Energiespeicher (30) und den wageneigenen Antrieb (20) sowohl von dem Gleichspannungszwischenkreis (40) als auch von dem eigenen Gleichspannungssteller (112) elektrisch abtrennt.

10. Fahrzeug (10) nach Anspruch 1,
**dadurch gekennzeichnet, dass**
in jedem der zumindest zwei Wagen (11, 12) jeweils eine Doppelschalteinrichtung (120, 130) vorhanden ist, die
- in ihrer Normalbetriebsstellung einen wageneigenen Energiespeicher (30) mittelbar über einen wageneigenen Gleichspannungssteller (111, 112) mit dem Gleichspannungszwischenkreis (40) verbindet sowie den wageneigenen Antrieb (20) mit dem Gleichspannungszwischenkreis (40) verbindet und
- in ihrer Notbetriebsstellung den wageneigenen Energiespeicher (30) unmittelbar mit dem wageneigenen Antrieb (20) verbindet sowie den wageneigenen Energiespeicher (30) und den wageneigenen Antrieb (20) sowohl von dem Gleichspannungszwischenkreis (40) als auch dem wageneigenen Gleichspannungssteller (111, 112) elektrisch abtrennt.

11. Fahrzeug (10) nach einem der voranstehenden Ansprüche,
**dadurch gekennzeichnet, dass**
zur netzseitigen Speisung des wagenübergreifenden Gleichspannungszwischenkreises (40) ausschließlich ein einziger netzseitiger Umrichter (50) vorhanden und an den wagenübergreifenden Gleichspannungszwischenkreis (40) angeschlossen ist.

12. Fahrzeug (10) nach Anspruch 11,
**dadurch gekennzeichnet, dass**
- das Fahrzeug (10) einen einzigen netzseitigen Transformator (60) aufweist,
- der einzige netzseitige Transformator (60) zwischen den einzigen netzseitigen Umrichter (50) und einen fahrzeugseitigen Stromabnehmer (70) geschaltet ist und
- der einzige netzseitige Umrichter (50) elektrisch zwischen den wagenübergreifenden Gleichspannungszwischenkreis (40) und den einzigen netzseitigen Transformator (60) geschaltet ist.

13. Verfahren zum Betreiben eines Fahrzeugs (10),
**dadurch gekennzeichnet, dass**
- zumindest zwei Wagen (11, 12) des Fahrzeugs jeweils mit einem elektrischen Antrieb (20) und einem elektrischen Energiespeicher (30), der zum Speisen des jeweiligen Antriebs (20) geeignet ist, ausgestattet sind und
- die Antriebe (20) der zumindest zwei Wagen (11, 12) im Normalbetrieb von einem wagenübergreifenden Gleichspannungszwischenkreis (40) des Fahrzeugs (10) mit Antriebsenergie gespeist werden und im Falle eines Notbetriebs mit gespeicherter Energie des Energiespeichers (30) des jeweiligen Wagens (11, 12) gespeist werden.

14. Verfahren nach Anspruch 13,
**dadurch gekennzeichnet, dass**
- für den Normalbetrieb die Energiespeicher (30) der Wagen (11, 12) mittelbar über einen Gemeinschaftsgleichspannungssteller (110) mit dem Gleichspannungszwischenkreis (40) verbunden werden und
- für den Notbetrieb die Energiespeicher (30) unmittelbar mit dem Antrieb (20) ihres jeweiligen Wagens (11, 12) verbunden werden, unter Bildung eines den Gemeinschaftsgleichspannungssteller (110) elektrisch umgehenden Bypasses.

15. Verfahren nach einem der voranstehenden Ansprüche 13 bis 14,
**dadurch gekennzeichnet, dass**
der Antrieb (20) zumindest eines der Wagen (11, 12) im Notbetrieb mittels eines Schaltelements von dem Gleichspannungszwischenkreis (40) getrennt wird.
